# EUROPEAN PATENT APPLICATION

(11) **EP 2 685 220 A2**
(43) Date of publication of application: **15.01.2014**
(21) Application number: 13175314.7
(22) Date of filing: 05.07.2013
(51) Int. Cl.: G01D 3/08

(54) **Self-powered sensor system**

(30) Priority: 10.07.2012 EP 12175723
(71) Applicant: Stichting IMEC Nederland, 5656 AE Eindhoven (NL)
(72) Inventor: van Liempd, Chris, 3001 Leuven (BE); Pop, Valer, 3001 Leuven (BE); Oudenhoven, Jos, 3001 Leuven (BE)
(74) Representative: Clerix, André

(57) **Abstract**

The invention relates to a self-powered sensor system (200) comprising: an autonomous sensor unit (210) including at least one energy harvester which converts an induced vibration into at least one electrical signal (02); a power management unit (220) comprising analogue signal processing circuitry (230, 240), said analogue signal processing circuitry being configured for extracting and generating, from said received at least one electrical signal (02), at least one digital output signal (07) indicative of a sensed physical state and at least one electrical power signal (08); and at least one user unit (250) comprising electronic circuitry being powered by said at least one electrical power signal (08) and/or receiving said at least one digital output signal (07) provided by said power management unit (220). The invention also relates to an electronic or network system, a machine or part thereof, a tire or wheel and a means of transport comprising a self-powered sensor system (200) according to an embodiment of the invention.

## Description

### TECHNICAL FIELD

The present invention relates in general to the field of sensor systems and more specifically to self-powered sensor systems.

### BACKGROUND

Self-powered sensor systems become steadily standard components in our environment for use in monitoring applications and they become smaller, cheaper and more sophisticated. Wide-scale deployment of this kind of systems and applications depends primarily on its ability to operate for long periods of time and it is considered that, for the intended application lifetimes, this object is not reached when using batteries, due to size limitations and the need to recharge. Furthermore, environmental issues are of great importance for battery powered systems. Therefore, in order to improve system autonomy and lifetime, effort is ongoing to replace batteries with small and long lasting power sources like energy harvesters.

Energy harvesting or energy scavenging is the process of converting unused ambient energy into electrical power. Energy harvesting devices come in various forms, and can provide electrical power by means of vibration, thermal, photovoltaic and radiofrequency conversions.

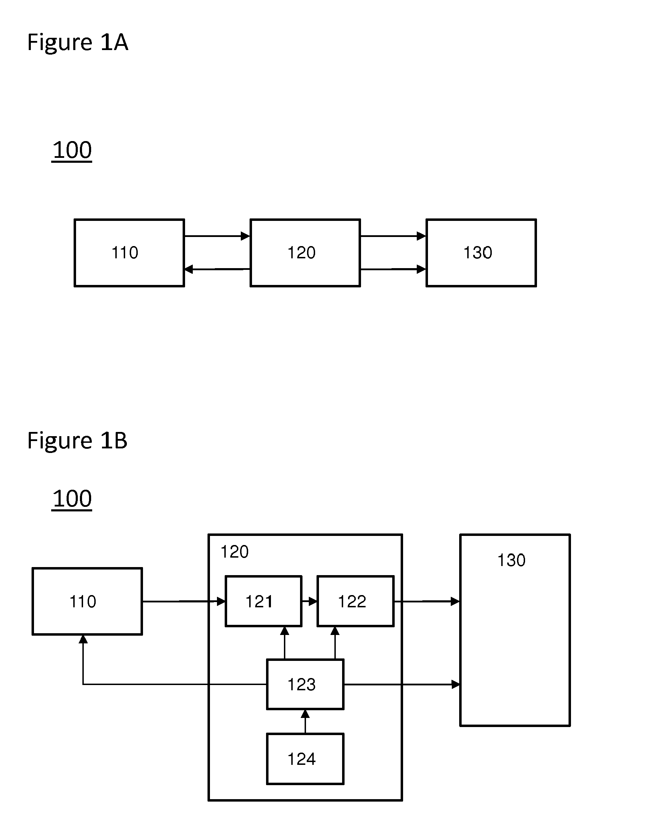

A general block diagram of an exemplary and generally known self-powered sensor system **100** is presented in **Figure 1A****.** It comprises a sensor unit **110** a power and control unit **120** and a display and/or communication unit **130.** The sensor unit **110** comprises, for example, at least one sensor device which converts a physical quantity or physical state into a signal, which is provided to the power and control unit **120** for evaluation and further process. The power and control unit **120** generally comprises, as shown in **Figure 1B****,** an Analog-to-Digital Converter (ADC) **121,** a microprocessor or microcontroller **122,** a power management module **123** and a power supply module **124.** The power supply module **124** may comprise a battery and/or an energy harvesting device and is intended to provide enough electrical power for the operation of the entire sensor system **100.** The power management module **123** is in charge of regulating and distributing the electrical power generated by the power supply module **124** to all the system modules and units, so that system operation is performed as expected. The ADC **121** converts the sensor unit output signal to a digital format to be be processed by the microprocessor or microcontroller **122,** which is in charge of performing algorithmic operations intended for system operation control and providing the necessary digital outputs to the display and/or communication unit **130.** The display and/or communication unit **130** comprises means for displaying the data received from microprocessor or microcontroller **122** and/or transceiver means for transmitting and/or receiving information related to the self-powered sensor system **100.**

A problem with the current state of the art self-powered sensor systems as described above is the still high power consumption, manufacturing costs and large implementation area needed.

### SUMMARY

It is an object of the present invention to provide an improved self-powered sensor system, which reduces manufacturing costs, implementation area and/or system power consumption.

According to one embodiment of the invention, there is provided a self-powered sensor system comprising: an autonomous sensor unit including at least one energy harvester which converts an induced vibration into one electrical signal; a power management unit comprising analogue signal processing circuitry configured for extracting and generating, from the one electrical signal, at least one digital output signal indicative of a physical state being sensed and at least one electrical power signal; and at least one user unit comprising electronic circuitry being powered by said at least one electrical power signal and receiving said at least one digital output signal provided by said power management unit.

According to an embodiment of the invention, by providing one autonomous sensor unit, e. g. an energy harvester, which does not need electrical power to generate at least one electrical signal and by providing analogue signal processing circuitry which can extract and generate, from a single electrical signal received from an energy harvester, at least one digital output signal indicative of a certain sensed physical state and at least one electrical power signal that can be used to power at least part of the additional electronic circuitry needed for the operation of the self-powered sensor system, the energy consumption, the manufacturing costs and/or the implementation area of the self-powered sensor system can be advantageously reduced. The self-powered sensor system, according to an embodiment of the invention, comprises at least one autonomous sensor unit, which avoids the need to implement, as different entities or units, a sensor for sensing a certain physical state and an energy supply for providing power to the system circuitry. The self-powered sensor system, according to an embodiment of the invention, combines in one single non-powered entity, e.g. the autonomous sensor unit, the sensing and the power supply functionality. The autonomous sensor unit, according to one embodiment of the invention includes at least one vibration energy harvester, which may comprise electrostatic, piezoelectric and/or electromagnetic transduction capabilities. Vibration energy harvesters are of specific interest for environments where sinusoidal or repetitive shocks are present and can convert an induced vibration into an electrical signal. Also according to an embodiment of the invention, a power management unit comprising analogue signal processing circuitry is advantageously combined with a vibration energy harvester in order to extract and generate at least one digital output signal indicative of a sensed physical state and at least one electrical power signal which can be used by other units of the system, in the following referred to as user units. The user units could be, but are not limited to, one or more of a display unit, a communications unit, a digital control unit, a battery or at least another sensor unit. Additionally and advantageously, the self-powered sensor unit according to an embodiment of the invention has embedded own analogue intelligence and therefore does not require, for extracting certain physical sensed states, the use of ADCs, microprocessors or microcontrollers, memories or algorithms, which would increase energy consumption, implementation area and system complexity. Therefore, by decreasing the number of complex components or units needed for performing the sensing, processing and/or power supply functionality the self-powered sensor unit according to an embodiment of the invention reduces size, maintenance problems, costs and increases robustness and reliability of the system. As a result, the life-time and autonomy of such self-powered sensor systems according to the invention is increased. Furthermore, processing time may be improved.

According to another embodiment of the invention the analogue signal processing circuitry unit further provides at least one power control signal for indicating to one or more user units when the power is available for operation. Therefore, the power management unit can advantageously indicate to the one or more user units the time point when the optimum electrical power signal its present for use and/or control the use of power by the one or more user units.

According to still another embodiment of the invention, the analogue signal processing circuitry is configured for generating a first and a second electrical power signal with different regulated voltage outputs and a corresponding first and second power control signal for indicating to one or more user units when each of the electrical power signals is available for operation. Therefore, the power management unit can further advantageously operate and generate, from a single rectified input DC voltage, two supply voltages to one or more user units.

According to still another embodiment of the invention, the analogue signal processing circuitry is configured for generating the second electrical power signal with a regulated voltage higher than the regulated voltage of the first electrical power signal and for providing the first electrical power signal to the one or more user units for a longer period of time than the second electrical power signal. Therefore, the power management unit can further advantageously operate and generate, from a single rectified input DC voltage, two supply voltages, with different characteristics and values, to one or more user units.

According to still another embodiment of the invention, the analogue signal processing circuitry is configured for extracting and generating, from said received at least one electrical signal, a first digital output signal representing a detected number of mechanical shocks. Therefore, the power management unit can advantageously extract and generate, using a low power analogue signal processing circuitry, a digital representation of a feature being sensed by the harvester, namely a number of mechanical shocks. According to still another embodiment of the invention, the first digital output signal representing a detected number of mechanical shocks is calculated based on that scaled forward current copy generated by the analogue signal processing circuitry. Therefore, further power can be reduced.

According to still another embodiment of the invention, the analogue signal processing circuitry is configured for extracting and generating, from said received at least one electrical signal, a second digital output signal representing a detected harvested energy. Therefore, the power management unit can advantageously extract and generate, using a low power analogue signal processing circuitry, a digital representation of a feature being sensed by the harvester, namely a representation of the harvested energy.

According to still another embodiment of the invention, the analogue signal processing circuitry comprises a single bridge rectifier which receives the at least one electrical signal, so that the analogue signal processing circuitry advantageously further reduces the use of rectifier components in order to operate and reduce energy consumption.

The invention also relates to an electronic system or network, a machine or part thereof, a tire or a wheel or a means of transport comprising a self-powered sensor system according to any embodiment herein claimed.

Certain objects and advantages of various inventive aspects have been described above. It is to be understood that not necessarily all such objects or advantages may be achieved in accordance with any particular embodiment of the invention. Those skilled in the art will recognize that the invention may be embodied or carried out in a manner that achieves or optimizes one advantage or group of advantages without necessarily achieving other objects or advantages as may be taught or suggested herein.

### BRIEF DESCRIPTION OF THE DRAWINGS

The accompanying drawings illustrate one or more exemplary embodiment(s) of the present invention and, together with the description, further serve to explain the principles of the invention and to enable a persona skilled in the art to make and use the invention.

**Figures 1A, 1B** show a block diagram of a known exemplary self-powered sensor system.

**Figures 2A, 2B** show a block diagram of a first and a second exemplary embodiment of a self-powered monitoring system according to the invention.

**Figure 3** illustrates a block diagram of an exemplary embodiment of a first analog processing circuit, in the power management unit of **Figure 2B****,** designed for shock detection.

**Figure 4** illustrates a block diagram of an exemplary embodiment of a second analog circuit, in the power management unit of **Figure 2B****,** designed for voltage regulation and harvested energy detection.

**Figure 5** shows time graphs of the output electrical power signals and power control signals provided by the power management unit according to an embodiment of the invention.

**Figure 6** shows the power output of a vibration energy harvester in a particular application environment according to an embodiment of the invention.

### DETAILED DESCRIPTION

In the following, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This is however not to be interpreted as the invention requiring more features than the ones expressly recited in each claim, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art.

In the description of the embodiments, numerous specific details are set forth. However, it is understood that embodiments of the invention may be practiced without these non-essential specific details. In other instances, well-known methods, structures and techniques have not been shown in detail in order not to obscure the understanding of this description.

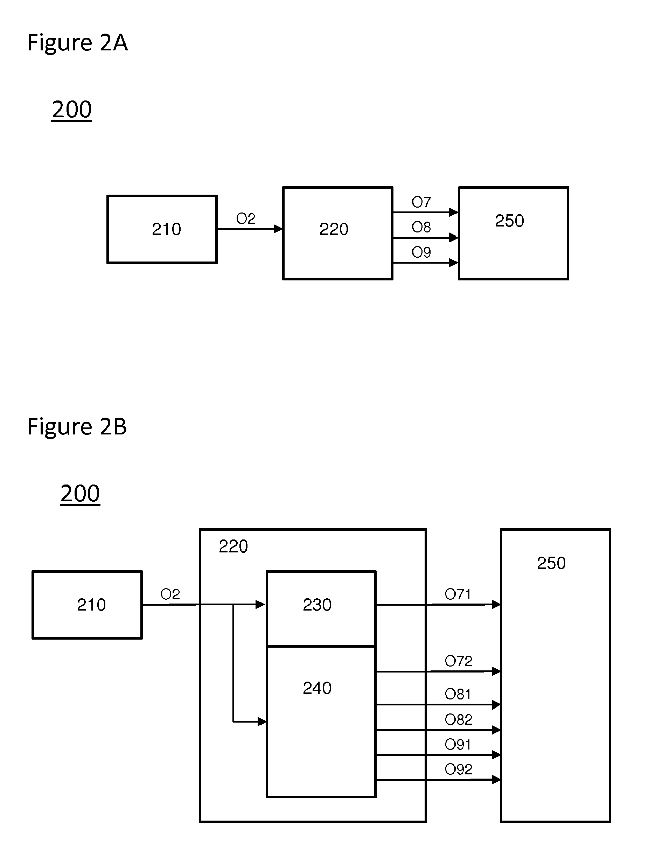

**Figure 2A** shows a block diagram of a general embodiment of a self-powered monitoring system **200** according to the invention, comprising an autonomous sensor unit **210,** a power management unit **220** and one or more user units **250,** which is/are represented in the figure as a single general block. The autonomous sensor unit **210** generates and provides an electrical signal **02** to the power management unit **220,** which, from that received electrical signal, extracts and generates at least one digital output signal **07** indicative of a_certain sensed or detected physical state and at least one electrical power signal **08** intended, for example, for powering the user unit **250.** Advantageously, the power management unit **220** may further generate at least one power control signal **09** to indicate the user unit **250** when the power is available for operation and/or ready for use. The user unit **250,** which may be, for example, one or more of a display unit, a communications unit, a digital control unit, a battery or at least another sensor unit, receives and uses at least one of the outputs generated by the power management unit **220,** either for powering its electronic circuitry during a certain period of time or using the one or more digital output signals for further processing or operation. Advantageously, a user unit **250** may use at least one digital output signal **07** indicative of a sensed physical state and at least one electrical power signal **08** for its operation. Furthermore, a user unit **250** may use at least one power control signal **09** for its operation.

The self-powered sensor system **200** according to an embodiment of the invention advantageously combines in one single non-powered entity, the autonomous sensor unit **210,** the sensing and the power supply functionality. The autonomous sensor unit **210** according to one embodiment of the invention includes at least one vibration energy harvester, which may comprise electrostatic, piezoelectric and/or electromagnetic transduction capabilities. An example of a vibration energy harvester is disclosed, for example in the paper *"*Shock induced energy harvesting with MEMS harvester for automotive applications", R.Elfrink, S.Matova, C.de Nooijer, M.Jambunathan, M.Goedbloed, J.van de Molengraft, V.Pop, R.J.M.Vullers, M.Renaud and R.van Schaijk, IEEE 2011, IEDM11-677 to 680.

Also according to an embodiment of the invention, the power management unit **220** comprises analogue signal processing circuitry and is advantageously combined with a vibration energy harvester in order to extract and generate, from the electrical signal provided by the energy harvester, at least one digital output representing a certain sensed physical state such as, for example, but not limited to, vibration, rotation, speed, shocks, force, and/or power and at least one electrical power signal which can be used by one or more user units **250.** In an embodiment the power management unit **220** advantageously converts an irregular energy flow from the energy harvester into a regulated power signal and at least this condition may be signaled to the user unit **250** by means of a power control signal **09.** Alternatively, the received irregular energy flow may be, in some cases, used directly by the user unit **250** for operation purposes. The analogue signal processing circuitry of the power management unit **220** advantageously extracts and detects one or more specific states of interest from a single electrical signal generated by at least one energy harvester. According, for example, to a possible embodiment of the invention, a user unit **250** may be a communications unit, which receives at least one digital output signal **07** representing a certain physical state, for example, but not limited to, vibration, rotation, speed, shocks, force, and/or power and then transmits such signal, and/or other state representations derived from that received digital output signal representation, via wired or wireless communication means.

**Figure 2B** shows a block diagram of another embodiment of a self-powered monitoring system **200** according to the invention, comprising an autonomous sensor unit **210,** a power management unit **220** and one or more user units **250,** which are represented in the figure as a general single block. Similarly to the autonomous sensor unit **210** described in **Figure 2A****,** such unit generates and provides, also according to the description above, at least one electrical signal **02** to the power management unit **220.** The power management unit **220** comprises a first analogue signal processing circuit **230** configured for extracting and generating, from the received electrical signal **02,** a first digital output signal **071** representing a detected number of shocks. The power management unit **220** further comprises a second analogue signal processing circuit **240** configured for extracting and generating, from the received electrical signal **02,** a second digital output signal **072** representing a detected harvested energy. The power management unit **220** further comprises analogue signal processing circuitry for generating a first and a second electrical power signal **081, 082** with different regulated voltage outputs and generating a corresponding first and second power control signal **091, 092** for indicating to one or more user units **250** when each of the electrical power signals is available for operation. It shall be understood that, although, for the sake of simplification and clarity, the analogue signal processing circuitry of the power management unit **220** has been split in two different circuits **230, 240,** those circuits may be implemented as a single analogue circuit providing all the above referenced outputs.

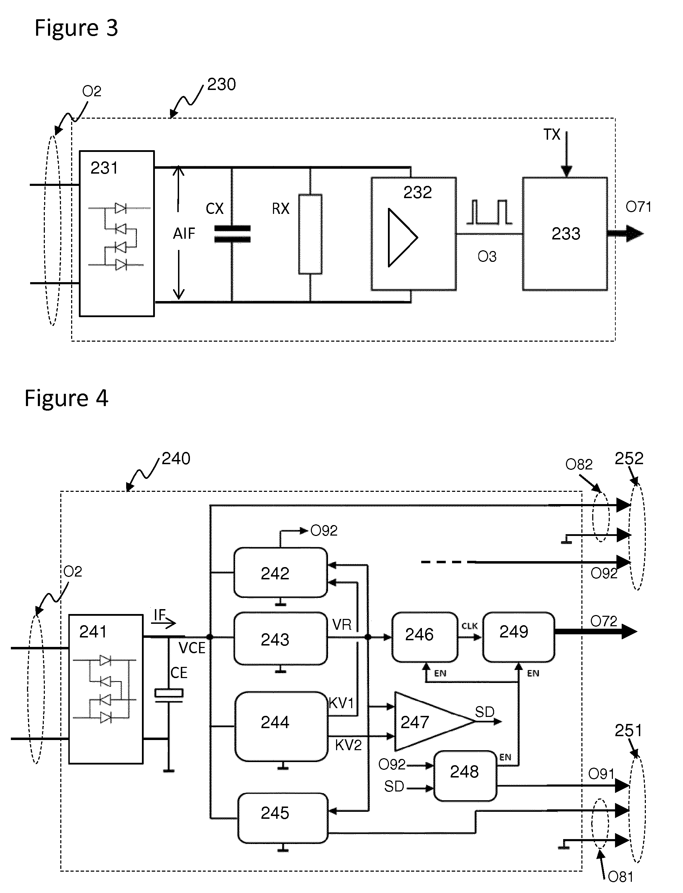

**Figure 3** shows a block diagram of an exemplary embodiment of the first analogue signal processing circuit **230** in the power management unit **220** illustrated in **Figure 2****B.** The first analogue signal processing circuit **230** according to an embodiment of the invention is designed for detecting mechanical shocks, a shock being a sudden acceleration or deceleration. The first analogue signal processing circuit **230** according to an embodiment of the invention comprises an active bridge rectifier circuit **231,** a capacitor **CX,** a resistor **RX,** a shock sensing circuit **232** and a counter circuit **233.** which is enabled during a certain period of time **TX.**

The active bridge rectifier circuit **231** includes current controlled active diodes which provide a scaled forward current copy **AIF** of a charge current **IF** (shown in **Figure 4****).** The scaled current copy **AIF** is a copy proportional to the charge current **IF,** said proportion being defined by a constant substantially smaller than one in order to enable low power consumption by the first analogue signal processing circuit **230.** The scaled forward current copy **AIF** charges an RC network **CX, RX,** which define a time constant **TX.** The shock sensing circuit **232** includes a peak detector and a comparator, and a pulsed output **03** to the counter circuit **233.** The time constant **TX,** wherein TX = RX x CX, should be chosen such that the best detectable shape is obtained. The counter circuit **233** provides a first digital output signal **071,** by means, for example of a plurality of bits, representing a detected number of shocks. It shall be understood that from the detected shock information, for example, shock frequency and number of shocks, further useful characteristics may be also extracted, for example, speed or distance information, by means of further processing calculations. The first analogue signal processing circuit **230** allows extracting shock information from an energy harvester while an energy storage capacitor **CE** (shown in **Figure 4****)** is charging.

**Figure 4** shows a block diagram of an exemplary embodiment of the second analogue signal processing circuit **240** in the power management unit **220** illustrated in **Figure 2****B.** The second analogue signal processing circuit **240** according to an embodiment of the invention is designed for providing voltage regulation and harvested energy detection. The second analogue signal processing circuit **240** according to an embodiment of the invention comprises an active bridge rectifier circuit **241,** an energy storage capacitor **CE** being charged by a charge current **IF,** a shunt regulator circuit **242,** a voltage reference circuit **243,** a voltage attenuator circuit **244,** a low dropout regulator circuit **245,** a relaxation oscillator circuit **246,** a comparator **247,** a logic circuit **248** and a power counter circuit **249.**

The active bridge rectifier circuit **241** converts alternating current energy, from a vibration energy harvester, into direct current (DC) energy, represented in the figure as an input DC voltage **VCE.** The voltage reference circuit **243** provides a constant DC electrical output signal as reference voltage **VR** having a constant reference voltage to ground. The voltage attenuator circuit **244** provides two linear attenuated output voltages **KV1, KV2,** derived from the input DC voltage **VCE,** with attenuation factors K1 and K2. The shunt regulator circuit **242** functions as an ideal clamp, so that if the input DC voltage **VCE** is lower than a certain threshold voltage the input current is zero. The input voltage is never allowed to be larger than threshold voltage, and, in that case, the shunt regulator circuit **242** clamps the input voltage to the threshold and shunts all input current to ground. The shunt regulator circuit **242** activates a second power control signal **092** when it is in clamp mode. The low dropout regulator circuit **245** is a linear series voltage regulator that provides a first electrical power signal **081,** which is a regulated DC output voltage signal, when the input DC voltage **VCE** is larger than said regulated DC output voltage signal. The relaxation oscillator circuit **246** provides a clock signal output **CLK,** with a constant frequency, when its enable input **EN** is active. The power counter circuit **249** counts the periods of the clock signal output **CLK** during a certain time when its enable input **EN** is active. The power counter circuit **249** provides a second digital output signal **072,** by means, for example of a plurality of bits, representing a detected harvested energy. The comparator **247** provides a startup detection indication signal **SD** when the input DC voltage **VCE** has reached a certain minimal threshold voltage. The logic circuit **248** generates an enable output signal **EN** in a time slot after the startup detection indication signal **SD** becomes active and until the second power control signal **092** becomes active and generates a first power control signal **091** in the time slot after the second power control signal **092** becomes active and until the startup detection indication signal **SD** is deactivated. The second analogue signal processing circuit **240** also provides a second electrical power signal **082,** which is the input DC voltage **VCE** shunted by the shunt regulator circuit **242.**

Advantageously, the second analogue signal processing circuit **240,** according to an embodiment of the invention, operates on a single rectified input DC voltage **VCE** to provide two energy aware intermittent supply voltages to users, referred to as a first and a second electrical power signal **081, 082.** In addition, the second analogue signal processing circuit **240** senses the harvested energy during intermittent periods, represented by a digital output signal, referred as the second digital output signal **072.**

A shunt regulator circuit **242** and a low dropout regulator circuit **245** are used to provide regulated supply voltages. A low power reference voltage **VR** provides an accurate reference for generating a startup detection indication signal **SD,** the shunt regulator circuit output voltage and the low dropout regulator circuit regulated output voltage. The startup detection indication signal **SD** and a second power control signal **092** are used to provide the enabling time slot for the relaxation oscillator circuit **246** and the power counter circuit **249.** The shunted output voltage, referred to as the second electrical power signal **082** may be supplied to an auxiliary user unit. The first and the second power control signals **091, 092** indicate that respectively the first and the second electrical power signals **081, 082** are in regulation and can be used.

According to one embodiment of the invention, the power management unit **220** provides the first electrical power signal **081** and the first power control signal **091** to a first or main user unit **251** and the second electrical power signal **082** and the second power control signal **092** to a second or auxiliary user unit **252.**

According to one embodiment of the invention, the power management unit **220** comprises a single active bridge rectifier circuit, which is used by both the first and the second analogue signal processing circuit **230, 240,** an the analogue signal processing circuitry is configured for, from that single active bridge rectifier circuit, generating both the charge current **IF** and the scaled forward current copy **AIF** of that charge current **IF.**

It shall be understood that although some elements of the analogue signal processing circuitry according to an embodiment of the invention deal with digital-like signals and logic digital-like circuits, they do not deal with bits of information and follow digital bit instructions, as could be the case with a microcontroller, for generating a digital-like or digital compatible signal.

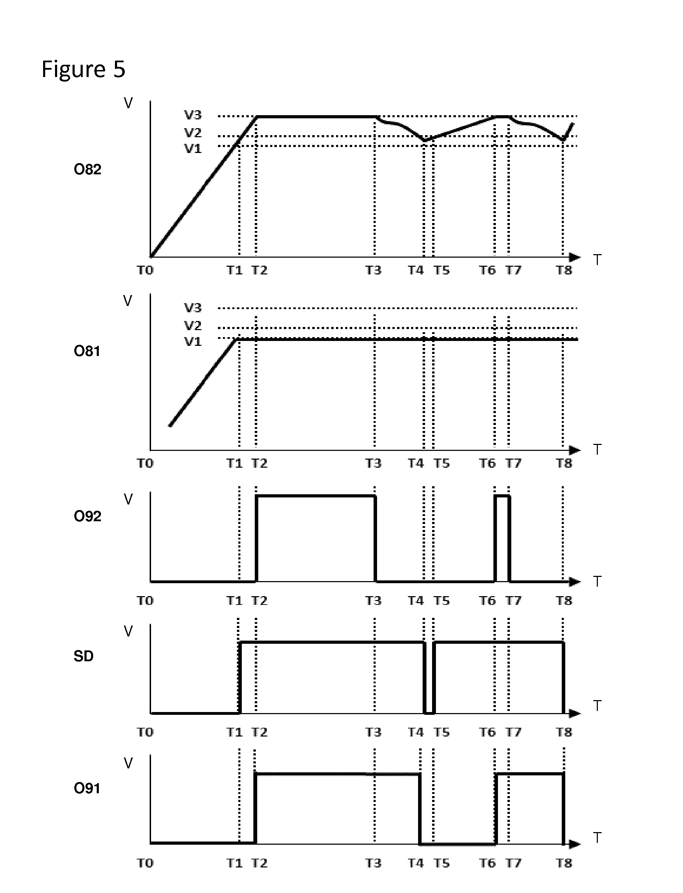

**Figure 5** illustrates an exemplary representation of the time graphs of the output electrical power signals **081, 082** and power control signals **091, 092** provided by the second analogue signal processing circuit **240** of **Figure 4****.** According to an embodiment of the invention, the second analogue signal processing circuit **240** also generates, for example, a startup detection indication signal **SD** for internal operation control of the power management unit **220.**

The timing diagram of **Figure 5** shows the relations when the rectified input DC voltage **VCE** (shown in **Figure 4****)** changes, that is, when, after a period of rest, the energy harvester is exposed again, at a certain initial time **T0,** to mechanical vibration of its sensing and harvesting mechanism. This may happen, for example, when the self-powered sensor system according to an embodiment of the invention is used to extract information from a certain machine, apparatus or part thereof, which has been at a rest or standby state during a certain period of time and said machine, apparatus or part thereof starts inducing a vibration in the energy harvester. This may also happen, for example, when the self-powered sensor system according to an embodiment of the invention is used to extract information from a tire or a wheel, once the tire or wheel has been at rest during a certain period of time and at a certain point such tire or wheel changes state and starts inducing a vibration in the energy harvester. At that point, the self-powered sensor system according to an embodiment of the invention starts harvesting energy and the rectified input DC voltage **VCE** rises up to a first voltage threshold **V1** and the low dropout regulator circuit **245** starts regulating. Short after the rectified input DC voltage **VCE** passes a second voltage threshold **V2,** for example when a second linear attenuated output voltage **KV2** equals the reference voltage **VR,** at a first time point **T1,** the analogue circuit activates the startup detection indication signal **SD** and an enable signal **EN** so that the power counter circuit **249** counts pulses of the clock signal output **CLK.** The power counter circuit **249** counts pulses until the voltage reaches a third voltage threshold **V3,** for example when a first linear attenuated output voltage **KV1** equals the reference voltage **VR,** at a second time point **T2.** According to an embodiment of the invention, the power counter circuit **249** provides, at the second time point **T2,** a digital output signal or value, referred in **Figure 4** as the second digital output signal **072,** representing the time passed between the second and the third voltage thresholds **V2, V3,** thus providing an indication of the harvested power. Also according to an embodiment of the invention, the power counter circuit **249** provides a digital output value signal which is proportional to the inverse of the harvested energy. Also at the second time point **T2,** the shunt regulator circuit **242** starts limiting the voltage and the first and second power control signal **091, 092** are activated to indicate to the main and/or the auxiliary user unit **251, 252** that they are allowed to use the corresponding output electrical power signals **081, 082** for powering their electronic circuitry and thereby start or resume operation. At a certain time point, for example a third time point **T3,** and due to the use of the power provided by the power management unit, the rectified input DC voltage **VCE** may be caused to decrease, for example when the used power is higher than the average harvested power. According to an embodiment of the invention, when the shunt regulator circuit loses regulation at the third time point **T3,** an indication is provided, for example by deactivating the second power control signal **092,** to the auxiliary user unit **252** that it shall stop using the second electrical power signal **082.** Also according to an embodiment of the invention, when the rectified input DC voltage **VCE** further decreases in voltage, to for example, approximately the second voltage threshold **V2** minus a little hysteresis, at a fourth time point **T4,** an indication is provided, for example by deactivating the first power control signal **091,** to the main user unit **251** that it shall stop using the first electrical power signal **081.** As a result the rectified input DC voltage **VCE** raises again until the second voltage threshold **V2** is again reached at a fifth time point **T5.** According to an embodiment of the invention, at the fifth time point **T5** the power counter circuit **249** is reset and starts counting pulses again until the voltage reaches the third voltage threshold **V3** at a sixth time point **T6.** The power counter circuit **249** provides, at the sixth time point **T6,** a digital output signal or value representing the time passed between the second and the third voltage thresholds **V2, V3,** thus providing an indication of the harvested power. The indication of the harvested power is updated every intermittent power cycle, which depends on the harvested power, the value of the energy storage capacitor **CE** and the used power. The time graph following the sixth time point **T6** can be understood from what has been explained above for the time between the second time point **T2** and the fourth time point **T4.** It shall be understood that the above described embodiments do not imply the essentiality to connect two different user units to the power management unit, and that a person skilled in the art can derive other embodiments from the ones herein explained, for example, connecting just one user unit to the power management unit according to the invention or connecting just one user unit to the two electrical power signals or modifying the internal control signals so that the digital representation of the detected harvested power is provided with a different indication, for example, an accumulated value, a peak value, and integral, etc.

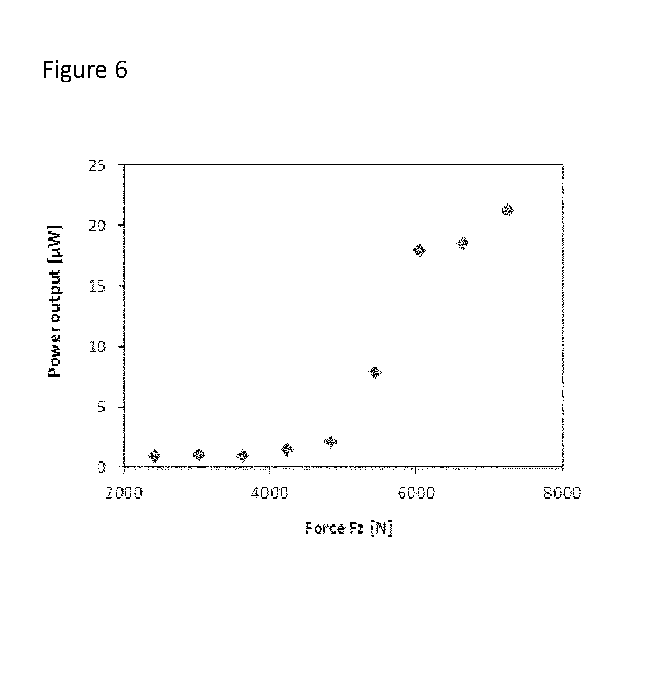

**Figure 6** shows the power output of a vibration energy harvester in a particular application environment according to an embodiment of the invention. The self-powered sensor system according to an embodiment of the invention may be used in an application environment intended to extract and monitor, from the detected information about the harvested energy, the load applied on a vehicle tire or wheel. The figure shows that the power output of an energy harvester is a function of the load applied on the tire or wheel. In this specific case, the energy harvester was mounted inside a car tire and the power output of the harvester was monitored while driving at a constant speed of 60 km/h. This experiment was repeated while increasing the load **Force Fz** on the wheel from 2410 to 7240 Newton. This load is applied on the wheel in the direction of the road surface, mimicking an increase in vehicle mass. The results of these experiments showed that the load has a positive correlation with the power output, and it is therefore demonstrated that the power output can be used as an indication of the load of the vehicle, when the other conditions, e.g. vehicle speed, remain unchanged.

The self-powered sensor system according to any of the embodiments herein described may be used, but not limited to, for example, in biopotential acquisition systems, power management systems, transport means or machine monitoring and/or control applications. Examples of some of such applications are machine or engine monitoring and control systems, failure mechanism monitoring and control or intelligent tire monitoring and control systems, and control or machine failure. Other industrial applications could include those where, for example, monitoring and/or control of the vibrations of machinery or equipment is required for research, tolerance or maintenance. Advantageously, such monitoring and control system applications can benefit from the self-powered sensor system according to an embodiment of the invention that consumes only nanowatts of power. An example of an application that can greatly benefit from the use of a the self-powered sensor system according to an embodiment of the invention are so called intelligent tire systems used in the automotive industry to monitor, for example, road, tire and/or wheel conditions. In a particular application example, the intelligent tire electronics comprising a self-powered sensor system according to an embodiment of the invention can be located inside a transport means wheel. In another particular application environment the self-powered sensor system according to an embodiment of the invention may be mounted on the wheel rim or in the wheel arches. In some application environments, the self-powered sensor system according to an embodiment of the invention can be mounted inside a tire so that specific tire parameters can be captured. It is understood that other locations for mounting the self-powered sensor system according to an embodiment of the invention are not excluded and may be similarly used for applications that benefit from the embodiments herein described. In general, other characteristics of the harvester output signal can be used for extracting vehicle and tire specific information, e.g. peak value, amplitude, integral, width of the signal. Moreover, mathematical formulae and algorithms may be used, based on physical models, empirical relations, and/or state estimation techniques.

The components of a self-powered sensor system according to an embodiment of the invention can be integrated on a substrate, for example, in a single substrate, and either in flexible, e.g. foil, or rigid, e.g. silicon, form. The components may also be implemented as discrete electronic components mounted on a Printed Circuit Board.

## Claims

1. A self-powered sensor system (200) comprising: an autonomous sensor unit (210) including at least one energy harvester which converts an induced vibration into at least one electrical signal (02); a power management unit (220) comprising analogue signal processing circuitry (230, 240), said analogue signal processing circuitry being configured for extracting and generating, from said received at least one electrical signal (02), at least one digital output signal (07) indicative of a sensed physical state and at least one electrical power signal (08); and at least one user unit (250) comprising electronic circuitry being powered by said at least one electrical power signal (08) and/or receiving said at least one digital output signal (07) provided by said power management unit (220).

2. A self-powered sensor system (200) according to claim 1 wherein the analogue signal processing circuitry (230, 240) further provides at least one power control signal (09) for indicating to one or more user units (250) when the power is available for operation.

3. A self-powered sensor system (200) according to claim 2 wherein the analogue signal processing circuitry (230, 240) is configured for generating a first and a second electrical power signal (081, 082) with different regulated voltage outputs and a corresponding first and second power control signal (091, 092) for indicating to one or more user units (250) when each of the electrical power signals (081, 082) is available for operation.

4. A self-powered sensor system (200) according to claim 3 wherein the analogue signal processing circuitry (230, 240) is configured for generating the second electrical power signal (082) with a regulated voltage higher than the regulated voltage of the first electrical power signal (081) and for providing the first electrical power signal (081) to the one or more user units (250) for a longer period of time (T2 to T4) than the second electrical power signal (082).

5. A self-powered sensor system (200) according to any of the preceding claims wherein the analogue signal processing circuitry (230, 240) is configured for extracting and generating, from said received at least one electrical signal (02), a first digital output signal (071) representing a detected number of mechanical shocks.

6. A self-powered sensor system (200) according to claim 5 wherein the analogue signal processing circuitry (230, 240) is configured for generating a scaled forward current copy (AIF) of a charge current (IF), said scaled forward current copy (AIF) being proportional to said charge current (IF) by a constant substantially smaller than one and the analogue signal processing circuitry (230, 240) is further configured for generating the first digital output signal (071) representing a detected number of mechanical shocks, based on that scaled forward current copy (AIF).

7. A self-powered sensor system (200) according to any of the preceding claims wherein the analogue signal processing circuitry (230, 240) is configured for extracting and generating, from said received at least one electrical signal (02), a second digital output signal (072) representing a detected harvested energy.

8. A self-powered sensor system (200) according to any of claims 5 to 7 wherein the analogue signal processing circuitry (230, 240) comprises a single bridge rectifier (231, 241) which receives said at least one electrical signal (02).

9. An electronic or network system comprising a self-powered sensor system (200) according to any of claims 1 to 8.

10. A machine or part thereof comprising a self-powered sensor system (200) according to any of claims 1 to 8.

11. A tire or wheel comprising a self-powered sensor system (200) according to any of claims 1 to 8.

12. A means of transport comprising a self-powered sensor system (200) according to any of claims 1 to 8.
